# EUROPEAN PATENT SPECIFICATION

(11) **EP 3 831 670 B1**
(45) Date of publication and mention of the grant of the patent: **24.08.2022**
(21) Application number: 20211800.6
(22) Date of filing: 04.12.2020
(51) Int. Cl.: B60R 21/06

(54) **FOLDABLE BARRIER NET**
FALTBARES BARRIERENETZ
FILET DE RETENUE PLIABLE

(30) Priority: 04.12.2019 SE 1900207; 04.12.2019 SE 1900208
(43) Date of publication of application: 09.06.2021
(73) Proprietor: Klippan Safety AB, 264 21 Klippan (SE)
(72) Inventor: KARLSSON, Alexander, 254 50 HELSINGBORG (SE)
(74) Representative: Ström & Gulliksson AB

(56) References cited:
- EP-A1- 2 993 085
- WO-A2-03/041998
- DE-A1-102004 050 546
- US-B1- 7 318 617

## Description

### TECHNICAL FIELD

The present invention relates to a foldable barrier net for separating a cargo area of a vehicle from a passenger compartment of the vehicle by being fastened to upper fastening elements and lower fastening elements of the vehicle.

### BACKGROUND

It is known to arrange barrier nets in vehicles, where the barrier net separates a cargo area from a compartment for a driver and passenger. The barrier net may be formed such that it can be folded in order to occupy the least amount of space when the barrier net is not used.

The publication GB 2 035 849 with priority from 1978, shows a barrier net intended to be used in a vehicle. The barrier net separates areas in the vehicle. The barrier net is mounted at an upper section of the vehicle with upper fastening arrangements formed as hooks, arranged outside the net, and mounted at a lower section of the vehicle by fastening elements.

The publication FR 2 951 121 with filing date 2009-10-08, shows a barrier net, wherein a net is fixed at an upper edge element, a lower edge element and two side elements of belt-shaped material. The upper edge element, at the outer end sections, have fastening arrangements in the form of hook elements arranged outside the upper edge element. The hook elements are intended to engage upper fastening elements arranged in an upper section of a vehicle.

The publication US 6,983,970 with priority from 2001, shows a barrier net wherein a net is surrounded by an upper edge element, a lower edge element and two side elements of belt-shaped material, the upper edge element, the lower edge element and the two side elements of belt-shaped material are formed such that passages are formed. Load bearing belts are arranged in the passages. At the corners of the barrier net there are openings in the upper edge element, the lower edge element and the two side elements of belt-shaped material, such that the passages are provided with openings wherein the load bearing belt can engage with fastening arrangements intended to engage with upper fastening elements arranged in an upper section of a vehicle and lower fastening elements arranged in a lower section the vehicle. The fastening arrangements are outside of the net and outside of the upper edge element, the lower edge element and the two side elements of belt-shaped material. WO 03/041998 A2 discloses a foldable barrier net for separating a cargo area of a vehicle from a passenger compartment of the vehicle by being fastened to upper fastening elements and lower fastening elements of the vehicle, the foldable barrier net comprises: an upper edge element having a through passage with open end sections,a resilient element, preferably in the form of a net, attached to the upper edge element, hook elements arranged at opposite ends of the passage.

In order to make barrier nets, as those referenced above, the requirements in on the fastening arrangements are high in order to provide durable and safe products. This makes manufacturing costly and it is evident that there is a need for a foldable barrier net that is easy to manufacture and that is cost-effective.

### BRIEF SUMMARY OF THE INVENTION

An object of the present invention is to provide a new type of foldable barrier net which is improved over prior art and which eliminates or at least mitigates the drawbacks discussed above. More specifically, an object of the invention is to provide a foldable barrier net that is easy to manufacture and that is cost-effective. These objects are achieved by the technique set forth in the appended independent claims with preferred embodiments defined in the dependent claims related thereto.

In a first common aspect, a foldable barrier net for separating a cargo area of a vehicle from a passenger compartment of the vehicle by being fastened to upper fastening elements and lower fastening elements of the vehicle, is presented. The foldable barrier net comprises an upper edge element having a through passage with open end sections, and a resilient element, preferably in the form of a net, attached to the upper edge element. The barrier net further comprise hook elements arranged at opposite ends of the passage, each hook element partly extending in the passage and extending through the open end sections for allowing fastening to the upper fastening elements of the vehicle. Further to this the barrier net comprises a load-bearing belt, extending partly inside the passage of the upper edge element and arranged to change directions by engagement with the hook elements inside the passage for fastening of the load-bearing belt to the lower fastening elements of the vehicle.

In one embodiment of the foldable barrier net, the upper edge element is provided with openings, and wherein the hook elements are extending in the passage at the openings.

In one embodiment of the foldable barrier net, the upper edge element is formed by folding an upper edge material to form the through passage, and wherein edges opposite to the folded side of the upper edge element are joined by one or more seams. The seam also attaches the resilient element to the upper edge element.

In one embodiment of the foldable barrier net, at least one of the openings is provided as an opening in the seam.

In one embodiment of the foldable barrier net, at least one of the openings is provided as an opening in the upper edge element material.

In one embodiment of the foldable barrier net, it further comprises a lower edge element attached to the resilient element at a side of the resilient element being closest to the lower fastening elements when the barrier net is mounted in the vehicle. The load-bearing belt is further arranged to engage with the lower edge element.

In one embodiment of the foldable barrier net, at least one of the hook elements comprises a first section partly located outside the passage and configured for fastening to the upper fastening elements of the vehicle. The rest of the first section is located inside the passage and transitions into a second section by means of a first bent section. The second section transitions into an end section by means of a second bent section.

In one embodiment of the foldable barrier net, the first bent section of the hook element, the second section of the hook element and the second bent section of the hook element are integrally formed.

In one embodiment of the foldable barrier net, a load-bearing seam is arranged in the upper edge element adjacent to a side of the end section of the hook element facing the resilient element.

In one embodiment of the foldable barrier net, the end section of the hook element is arranged adjacent to a side of the passage facing away from the resilient element.

In one embodiment of the foldable barrier net, a load bearing seam is arranged in the upper edge element adjacent to a side of the first section of the hook element facing the resilient element.

In one embodiment of the foldable barrier net, the hook elements are made from a rod material, preferably a metal rod material.

In one embodiment of the foldable barrier net, at least one of the hook elements further comprises a catch element configured to engage with the upper fastening elements of vehicle.

In one embodiment of the foldable barrier net, the load-bearing belt further comprises at least one tensioning arrangement.

In one embodiment of the foldable barrier net, one or more restricting seams are provided in the upper edge element proximal to ends of the hook elements facing away from the upper fastening elements of the vehicle.

### BRIEF DESCRIPTION OF THE DRAWINGS

Embodiments of the invention will be described in the following; references being made to the appended diagrammatical drawings which illustrate non-limiting examples of how the inventive concept can be reduced into practice.
Fig. 1 is a view of a foldable barrier net with upper fastening arrangements mounted in a vehicle according to embodiments of the invention.
Fig. 2 is a sectional view of a foldable barrier net with upper fastening arrangements according to embodiments of the invention.
Fig. 3 is a sectional view of a foldable barrier net with upper fastening arrangements according to embodiments of the invention.
Fig. 4 is a sectional view of a foldable barrier net with upper fastening arrangements according to embodiments of the invention.
Fig. 5 is a view of a foldable barrier net with upper fastening arrangements mounted in a vehicle according to embodiments of the invention.
Fig. 6 is a sectional view of a foldable barrier net with upper fastening arrangements according to embodiments of the invention.
Fig. 7 is a sectional view of a foldable barrier net with upper fastening arrangements according to embodiments of the invention.

### DETAILED DESCRIPTION OF PREFERRED EMBODIMENTS

### ASPECT 1

### Summary of Aspect 1

A foldable barrier net according to the present invention comprise an upper edge element, a lower edge element, two side elements and a resilient member, preferably a net, and also at least one load-bearing belt, wherein the load-bearing belt is arranged in a passage in the upper edge element. The load-bearing belt is attached to an upper section in the vehicle via upper fastening arrangements and attached to a lower section in the vehicle by means of lower fastening elements. The upper fastening elements of the barrier net have hook elements, wherein the hook elements are arranged in the passage of the upper edge element and wherein the hook element engages with the load-bearing belt and upper fastening element, arranged in an upper section of the vehicle. The hook element has one section that engages with the load-bearing belt and one section that engages with an upper fastening element arranged in an upper section of the vehicle. The hook element comprises a bar, preferably from metal, wherein a section of the hook element engages with the load-bearing belt and wherein a section of the hook element has a catch element configured to engage with an upper fastening element arranged in an upper section of the vehicle.

When the vehicle, in which the barrier net is mounted, is exerted to a heavy deceleration, for example in case of a traffic accident, the load in the cargo area will move forward and load the foldable barrier net. The force from the load is taken up by the load-bearing belt and transferred to the upper fastening elements and the lower fastening elements of the vehicle.

At the upper fastening arrangements of the foldable barrier net, the force from the load-bearing belt will be transferred to the hook elements and further to the upper fastening elements of the vehicle. When the hook element is exerted to a large enough force, the hook elements will deform. In order to avoid deformation of the hook elements, such that the load-bearing belt disengages the hook element when the foldable barrier net is affected by a force from the cargo, seams have been provided in the upper edge element of the upper fastening arrangements of the barrier net in connection to end section of the hook elements that are in connection with the section of the hook element that engages with the load-bearing belt.

By forming a foldable barrier net as set forth in the following aspects a foldable barrier net that is easy to manufacture and a foldable barrier net that is cost-effective is provided.

### Description according to Aspect 1

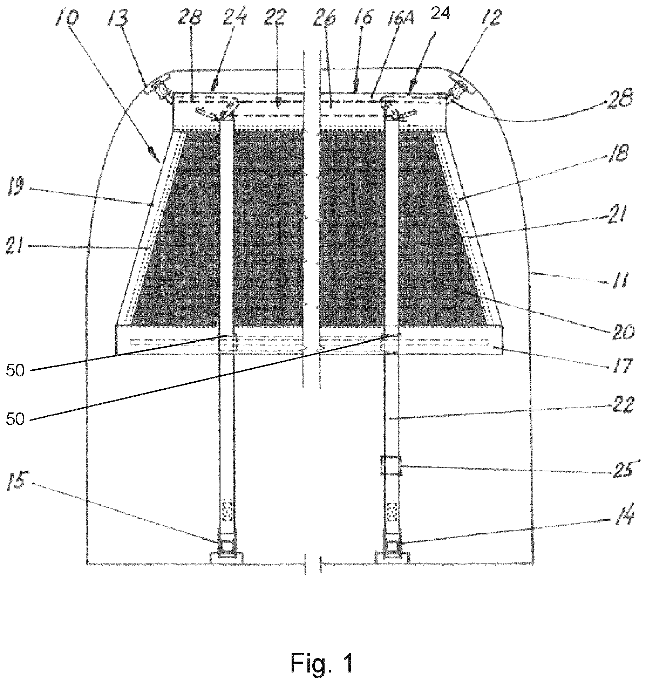

In Fig. 1, a foldable barrier net 10 mounted in a vehicle 11 is shown, wherein the foldable barrier net 10 is mounted by two upper fastening elements 12, 13 arranged in an upper section of a vehicle 11 and two lower fastening arrangements 14, 15 arranged in a lower section the vehicle 11. The barrier net 10 separates a cargo area in the vehicle 11 from a compartment for driver and passenger in the vehicle 11.

The foldable barrier net 10 comprises an upper edge element 16, a lower edge element 17 and two side elements 18, 19 arranged between the upper edge element 16 and the lower edge element 17. Between the upper edge element 16, the lower edge element 17 and the side elements 18, 19, a resilient element in the form of a net 20 is arranged. The net 20 is attached to the upper edge element 16, the lower edge element 17 and the side elements 18, 19 by means of seams 21. The upper edge element 16, the lower edge element 17 and the side elements 18, 19 are connected to one another by suitable seams (not shown in the figures).

The upper edge element 16 is formed as a passage 16A, in which a load-bearing belt 22 extends. The load-bearing belt 22 is attached at the lower fastening elements 14, 15, arranged in a lower section of the vehicle 11, and are held to the upper fastening elements 12, 13, arranged in an upper section of the vehicle 11, by upper fastening arrangements 24. The load-bearing belt 22 is provided with at least one tensioning arrangement 25 such that the load-bearing belt 22 may be stretched between the lower fastening elements 14, 15 via the two upper fastening arrangements 24. The load-bearing belt 22 is movable in relation to the upper fastening arrangements 24.

When the vehicle 1,1 in which the foldable barrier net 10 is mounted, is subjected to a heavy deceleration, such as in case of a traffic accident, the load in the cargo area of the vehicle 11 will move forward and be caught by the barrier net 10. The resilient element, the net 20, of the barrier net 10 catches the load and the force from the movement of the load is transferred from the net 20 to the upper edge element 16, the lower edge element 17 and the side elements 18, 19 and then further to the load-bearing belt 22. When the barrier net 10 is subjected to a force, e.g. in case of heavy deceleration, will, among other things, the upper edge elements 16 with the upper fastening arrangements 24 of the barrier net 10, move towards the center of the barrier net 10 along a section 26 of the load-bearing belt 22 being between the two upper fastening arrangements 24. The force from the forward movement of the load is transferred from the load-bearing belt 22 to the upper fastening arrangements 12, 13, arranged in an upper section of the vehicle 11, via the upper fastening arrangements 24.

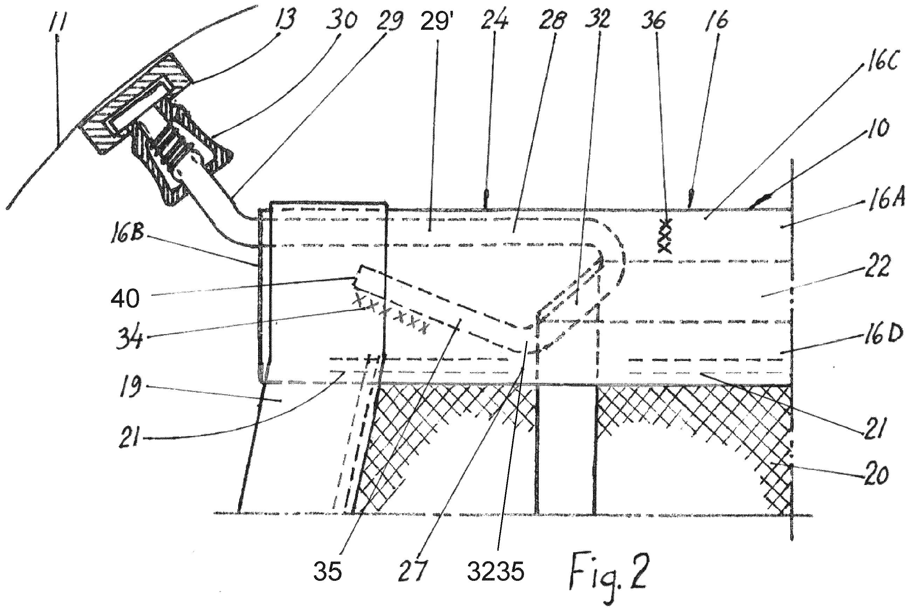

Fig. 2 depicts a section of a foldable barrier net 10 with an upper fastening arrangement 24, when the foldable barrier net 10 is attached to an upper fastening element 13, arranged in an upper section of a vehicle 11, via a hook element 28 of the upper fastening arrangement 24. Fig. 2 shows the upper edge element 16 and a side element 19, wherein the side element 19 extends across the upper edge element 16 and where the side element 19 and the upper edge element 16 are connected by suitable seams, not shown. The upper edge element 16 comprises, in the shown embodiment, a belt material that is folded to form a passage 16A when, e.g. the upper edge element 16 and the resilient element, the net 20, of the barrier net are joined by seams 21. The belt material of the upper edge element 16 has no seam at open end sections 16B of the upper edge element 16. The passage 16A of the upper edge element 16 has open end sections 16B wherein a through passage 16A is formed. The passage 16A of the upper edge element 16 has an upper section 16C, at which the belt material is folded and a lower section 16D at which the upper edge element 16 is connected to the resilient element, the net 20. In the passage 16A of the upper edge element 16 a load-bearing belt 22 extends between hook elements 28 of two upper fastening arrangements 24, only one upper fastening arrangement 24 is shown in Fig. 2, where the upper fastening arrangements 24 operatively connects the load bearing belt 22 to the upper fastening elements 12, 13, arranged in an upper section of the vehicle 11, only one upper fastening arrangement 24 is shown in Fig. 2. The load-bearing belt 22 exits the upper edge element 16 through openings 27 in the passage 16A, that is formed by the upper edge element 16, e.g. through openings 27 in the seam 21 connecting the upper edge element 16 to the resilient element, the net 20. The load-bearing belt 22 extends through the openings 27 to lower fastening elements 14, 15 arranged at a lower section of the vehicle 11, not shown in Fig. 2.

The upper fastening arrangement 24 of Fig. 2 comprises the upper edge element 16 and one hook element 28, wherein most of the hook element 28 is configured to be arranged in the passage 16A of the upper edge element 16. The first section 29 of the hook element 28, configured to be arranged outside the upper edge element 16, is, at a free end at the first section 29 of the hook element, being outside the upper edge element 16, provided with a catch element 30 arranged to engage with an upper fastening element 13, arranged in an upper section of a vehicle 11, when the foldable barrier net 10 is mounted in a vehicle 11. In a preferred embodiment, the hook element 28 comprises a rod, for instance a circular rod of metal.

The part of the hook element 28 configured to be in the passage 16A of the upper edge element 16 has a first section 29' extending from the first section 29 of the hook element 28, being outside the upper edge element 16, along the upper section 16C of the upper edge element 16, the section of the upper edge element 16 being distanced from the seam 21 connecting the upper edge element 16 to the resilient element, the net 20. At the part of the first section 29' of the hook element 28, being distanced from the first section 29 of the hook element 28, being outside the upper edge element 16, the hook element 28 is bent such that the hook element is provided with a second section 32 extending towards the lower edge element 17 of the barrier net 10 and towards the side element 19 of the barrier net 10 wherein the hook element 28 is arranged. The load-bearing belt 22 abuts the second section 32 of the hook element 28 and the load-bearing belt 22 changes direction such that it extends towards a lower fastening arrangement 14, 15, not shown in Fig. 2. At the end of the second section 32 of the hook element 28, to which the load-bearing belt 22 abuts, the hook element 28 is bent such that the hook element 28 is provided with an end section 35, wherein the end section 35 has a direction towards the open end section 16B of the passage 16A of the upper edge element 16 and the upper section 16C of the upper edge element 16, distanced from the seam 21. The end section 35 of the hook element 28 may have a direction towards the upper section 16C of the upper edge element 16, the first section 29' of the hook element 28.

The passage 16A of the upper edge element 16 is arranged to extend between the lower edge of the lower section 16D of the upper edge element 16, at the seam 21, and the upper edge of the upper section 16C of the passage 16A of the upper edge element 16, where the belt material forming the upper edge element 16 is folded, that is slightly larger than the distance between the outer edge of the first section 29' of the hook element 28 and the outer edge of the end section 35 of the hook element 28, at the transition of the hook element 28 to the second section 32 of the hook element 28, such that the hook element 28 can be inserted in the upper passage 16A of the upper edge element 16 with a tighter tolerance, for instance 1 to 5 mm.

When the vehicle 11 in which the foldable barrier net 10 is mounted, is exerted to heavy deceleration, e.g. in case of a traffic accident, the load will move forward and be caught by the barrier net 10. The resilient element, the net 20, catches the load and the force from the movement of the load is transferred from the net 20 to the upper edge element 16, the lower edge element 17 and the side element 18, 19 and then further to the load-bearing belt 22 and strive to deform the hook element 28 simultaneously as the upper edge element 16 with upper fastening arrangements 24 strive to move towards the central area of the barrier net 10, from the upper fastening elements 13, 14 , arranged in an upper section of the vehicle 11.

In order to prevent the hook element 28 from deforming causing the load-bearing belt 22 to disengage the hook element 28, or causing the upper edge element 16 with the upper fastening arrangements 24 to move toward the center of the barrier net 10, load-bearing seams 34 are provided at the upper fastening arrangements 24, on the side of end sections 35 of the hook elements 28 facing the lower section 16D of the upper edge element 16, towards the seam 21, attaching the upper edge element 16 to the resilient element, the net 20. By forming the hook elements 28 such that the end sections 35 of the hook elements 28 are directed towards the open end sections 16B of the passage 16A of the upper edge element 16 or such that end sections 35 of the hook elements 28 are directed towards the first sections 29' of the hook elements and arranging load-bearing seams 34 on the sides of the end sections 35 of the hook elements facing the lower section 16D of the upper edge element 16, towards the seam 21 attaching the upper edge element 16 to the resilient element, the net 20, deformation of the hook element 28 is prevented which would cause the load-bearing belt 22 to disengage the hook element 28, or cause the upper edge element 16 with the upper fastening arrangements 24 to move toward the center of the barrier net 10 along the load-bearing belt 22. The load-bearing seams 34 are arranged at an angle in relation to the passage 16A of the upper edge element 16, preferably along the end sections 35 of the hook element 28.

In order to prevent deformation of the hook element 28, causing the load-bearing belt 22 to disengage the hook element 28, when the foldable barrier net 10 is subjected to a force from the load, the hook elements 28 of the upper fastening arrangements 24 of the barrier net 10 are formed such that at a load causing deformation, sections of the hook element 28 will contact the lower edge of the lower sections 16D of the upper edge elements 16 of the fastening arrangements 24, such that further deformation is prevented.

By producing the hook element 28 from a rod, made from e.g. metal, with smallest possible diameter, the radiuses between the first section 29' of the hook element 28 and the second section 32 of the hook element and also the radius between second section 32 of the hook element 17 and the end section 35 of the hook element be minimized. With a hook element 28 having the smallest possible diameter, the width of the upper edge element may be minimized. This makes it possible to produce a cost-effective foldable barrier net 10.

To prevent the hook element 28 from moving along the upper passage 16A of the upper edge element 16 of the barrier net 10 towards the center of the barrier net 10 when the barrier net 10 is not mounted in a vehicle 11, the upper fastening arrangements 24 are not in contact with the upper fastening elements 12, 13, being in an upper section of a vehicle 11, are provided with a restricting seam 36 arranged behind the hook element 28, on the side of the hook element 28 being from the open end section 16B of the upper edge element 16.

By producing the hook element 28 from a rod, made from e.g. metal, wherein one end the rod of the hook element 28 is provided with a catch element 30, arranged to engage with upper fastening elements 12, 13 arranged in an upper section of a vehicle 11 and by shaping the rod of the hook element 28 to the shape described above solely by bending of the rod of the hook element 28, a barrier net 10 that is easy to produce and that is cost-effective can be provided.

By arranging load-bearing seams 34 at the end sections 35 of the hook elements 28, deformation of the hook elements 28 of the upper fastening arrangements 24 is prevented which would cause the load-bearing belt 22 to disengage the hook element 28 when the vehicle 11, in which the foldable barrier net 10 is mounted, is exerted to a heavy deceleration, in case of e.g. a traffic accident, when the load of the cargo area of the vehicle 11 moves forward and is caught by the barrier net 10. The load-bearing seams 34 also prevent the upper fastening arrangements 24 to move towards the center of the foldable barrier net 10.

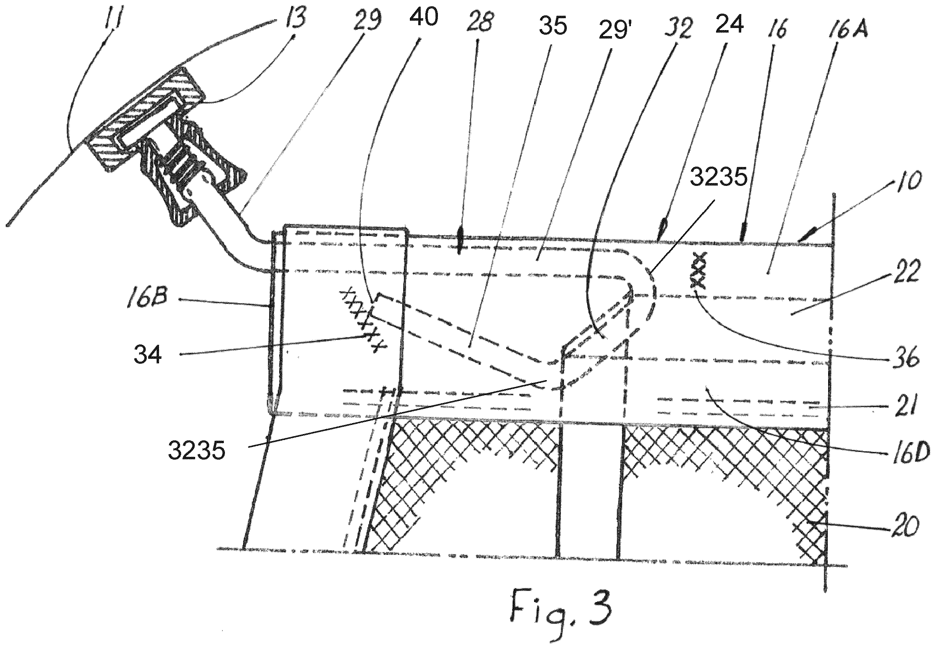

Fig. 3 shows one variant of the foldable barrier net 10 of Fig. 2, wherein an upper fastening arrangement 24 is provided with a load-bearing seam 34 arranged at the outer section 40 of the end section 35 of the hook element 28, wherein the load-bearing seam 26 is at an angle to the passage 16A of the upper edge element 16. The load-bearing seam 34 is arranged such that it engages with the part of the outer section 40 of the end section 35 of the hook element facing the lower section 16D of the upper edge element 16, at the seam 21 joining the upper edge element with the resilient member, the net 20. When the foldable barrier net is subjected to a force, such as in case of a heavy deceleration of the vehicle 11, when the load moves forward, the force transferred from the load-bearing belt 22 to the hook element 28 will affect the hook element 28 such that the hook element is deformed, whereby the outer section 40 of the end sections 35 of the hook element 28 will try to move towards the lower section 16D of the upped edge element 16. The angle of the load-bearing seam 34 to the passage 16A of the upper edge element 16 is such that the section of the load-bearing seam 34 being closest to the upper section 16C of the upper edge element 16 is closer to the open end section 16B of the upper edge element 16 than the section of the load-bearing seam 34 that is closer to the lower section 16D of the upper edge element 16.

By providing load-bearing seams 34 at the end sections 35 of the hook element, he hook element 28 of the upper fastening arrangements 24 are prevented from deforming such that the load-bearing belt 22 disengages from the hook element 28 when the vehicle 11, in which the foldable barrier net 10 is mounted, is subjected to a heave deceleration, such as in case of a traffic accident, when the load of the cargo area of the vehicle 11 moves forward and is caught by the barrier net 10. The load-bearing seam 34 also prevents the upper fastening arrangements 24 to move towards the center of the foldable barrier net 10.

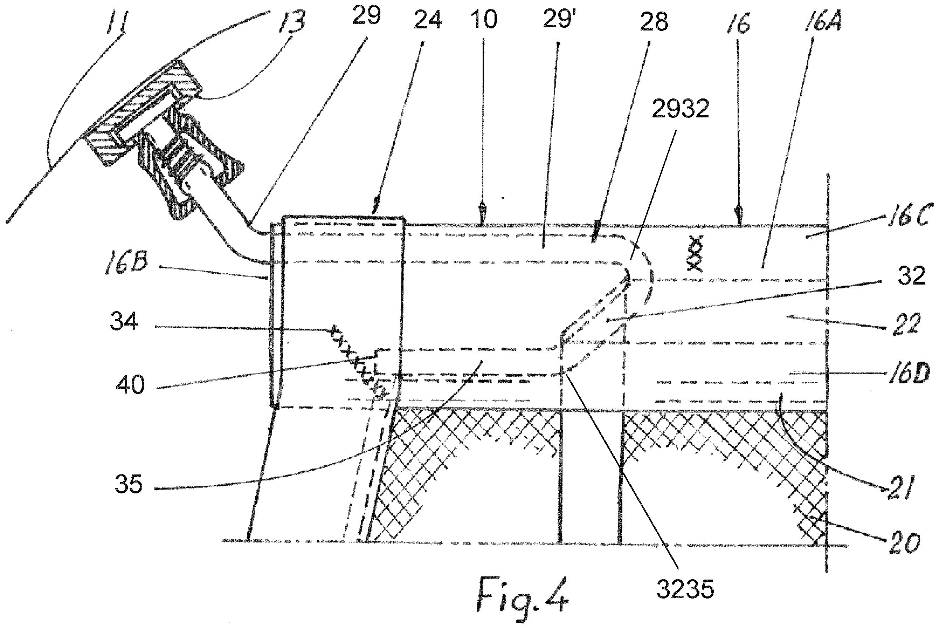

Fig. 4 illustrates a section of a variant of a foldable barrier net 10, wherein the foldable barrier net 10 has upper fastening arrangements 24, only one upper fastening arrangement 24 is shown in Fig. 4, wherein the barrier net 10 is mounted to an upper fastening element 13, arranged in an upper section of a vehicle 11, via the upper fastening arrangement 24. In Fig. 4,a hook element 28 is shown wherein the part of the hook element intended to be in the passage 16A of the upper edge element 16 has a first section 29' extending from the first section 29 of the hook element 16 being outside the upper edge element 16, along the upper section 16C of the passage 16A of the upper edge element 16, the section of the upper edge element 16 being distanced from the seam 21 joining the upper edge element 16 to the resilient member, the net 20. At the part of the first section 29' if the hook element 28 being distanced from the first section 29 of the hook element being outside the upper edge element 16, the hook element 28 is bent such that the hook element 28 is provided with a second section 41 extending towards the lower edge element 17 of the barrier net 10 and towards the side element 19 of the barrier net 10 wherein the hook element 28 is arranged. The load-bearing belt 22 bears on the second section 41 of the hook element 28 and the load-bearing belt changes directions such that it extends towards a lower fastening arrangement 14, 15, now shown in Fig. 4. At the end of the second section 41 of the hook element 28, on which the load-bearing belt 22 bears, the hook element 28 is bent such that the hook element 28 is provided with an end section 35, wherein the end section has a direction towards the open end section 16B of the passage 16A of the upper edge element 16. The end section 35 of the hook element 28 is, in the shown embodiment, substantially parallel to the passage 16A of the upper edge element 16.

At the outer section 40 of the end section 35 of the hook element, a load-bearing seam 34 is provided, The load-bearing seam 34 is at an angle to the passage 16A of the upper edge element 16. The load-bearing seam 34 is arranged such that it engages with the part of the outer section 40 of the end section 35 of the hook element 28 that is towards the lower section 16D of the upper edge element 16, at the seam 21 joining the upper edge element 16 to the resilient member, the net 20. When the foldable barrier net is subjected to a force, e.g. in case of heavy deceleration of the vehicle 11, when the load moves forward, the force transferred from the load-bearing belt 22 to the hook element 28 will affect the hook element 28 such that the hook element 28 will be deformed, such that the outer section 40 of the edge section 35 will try to move towards the lower section 16D of the upper edge element 16. The angle of the load-bearing seam 34 to the passage 16A of the upper edge element 16 is such that the section of the load-bearing seam 34 being closest to the upper section 16C of the upper edge element is closer to the open end section 16B of the upper edge element 16 than the section of the load-bearing seam 34 being closest to the lower section 16D of the upper edge element 16.

By arranging load-bearing seams 34 at the end sections 35 of the hook element, deformation of the upper fastening arrangements 24 is prevented, such that the load-bearing belt 22 disengages from the hook element 28 when the vehicle 11, in which the foldable barrier net 10 is mounted, is subjected to a heavy deceleration, e.g. in case of a traffic accident, when the load of the cargo area of the vehicle 11 moves forward and is caught by the barrier net 10. The load-bearing seam 34 also prevents the upper fastening arrangements 24 from moving towards the center of the foldable barrier net 10.

By means of the foldable barrier nets 10 described above, a foldable barrier net 10 is provided, adapted to separate a cargo area of a vehicle 11 from a compartment for a driver and a passenger in a vehicle 11, that are simple to produce and that are cost-effective.

In the above presented embodiments it has been disclosed that the load-bearing belt 22 exits the passage 16A of the upper edge element through openings 27 in the seam 21 joining the upper edge element 16 to the resilient element, the net 20, but the openings 27 may be provided in in the belt-shaped material comprising the upper edge element 16.

In the above presented embodiments it has been disclosed that the hook elements 28 of the upper fastening arrangements 24 may be of metal, but the hook elements 28 may be provided in other materials that can bear the forces occurring.

In the above presented embodiments it has been disclosed that load-bearing belt 22 extends between the lower fastening elements 14, 15, but the load-bearing belt may be in two sections wherein the sections are joined to a central section of the upper edge element 16 such that a continuous force-bearing unit is formed by the two sections of load-bearing belt 22 and a central part of the upper edge element 16.

A further object of the invention are means to provide for a foldable barrier net 10 with upper fastening devices 24, wherein the foldable barrier net 10 separates a cargo area of a vehicle 11 from a compartment for a driver and passenger of a vehicle 11, such that the foldable barrier net 10 is easy to produce and such that the foldable barrier net 10 is cost-effective.

One way comprises producing a unit comprising an upper edge element 16, a lower edge element 17, two side elements 18, 19 and a resilient member, preferably a net 20, wherein the upper edge element 16, the lower edge element 17 and the two side elements 18, 19 are joined to one another by suitable seams and the upper edge element 16, the lower edge element 17 and the two side elements 18, 19 and the resilient member, the net 20, are joined by seams 21. When producing the unit, the upper edge element 16 is formed from a belt material that is folded such that when the upper edge element 16 is joined to the resilient member, the net 20, by the seam 21, a passage 16A with open end sections 16B is provided. The upper edge element 16 forms upper fastening arrangements 24, 26 at the open end sections 16B of the passage 16A of the upper edge element 16.

Providing hook elements 28 wherein the hook elements 28 have a section 29 adapted to be located outside the upper edge element 16 when the hook elements 28 are mounted in the passage 16A of the upper edge element 16 and wherein the hook elements 28 have a first section 29' that, when the hook elements 28 are mounted in the passage 16A of the upper edge element 16, is at the upper section 16C of the passage 16A of the upper edge element 16, distanced from the seam 21 joining the upper edge element 16 to the resilient member, the net 20. The hook elements 28 have a second section 32, 41, adapted to engage with a load-bearing belt 22 and the hook elements 28 have an end section 35 extending towards the open end section 16B of the passage 16A of the upper edge element when the hook elements are arranged in the passage 16A of the upper edge element 16. Arranging the load-bearing belt 22 in the passage 16A of the upper edge element 16, arranging the load-bearing belt 22 such that it abuts the second sections 32, 41 of the hook elements and such that it exits the upper edge element 16 through openings 21 in the passage 16A of the upper edge element 16. After this, the hook elements 28 are inserted into the passage 16A of the upper edge element 16. When the hook elements 28 are in the passage 16A of the upper edge element 16, load-bearing seams 34 are sewn at the upper fastening arrangements 24 in connection to the end sections 35 of the hook elements 28. As previously described, a load-bearing seam 34 may be arranged along a part of the end section 35 of the hook element 28, or a load-bearing seam 34 may be arranged at the outer section 40 of the end section 35 of the hook element 28. The load-bearing seams 34 are at an angle to the passage 16A of the upper edge element 16. By means of the above disclosed way of providing a foldable barrier net 10 wherein load-bearing seams 34 ,34 are arranged at the end sections 35 of the hook element 28, accomplishes prevention of deformation of the hook elements 28 of the upper fastening arrangements 24 such that the load-bearing belt 22 disengages the hook element 28 when the vehicle 11, in which the foldable barrier net 10 is mounted, is subjected to a heave deceleration, e.g. in case of a traffic accident, when the load in the cargo area of the vehicle 11 moves forward and is caught by the barrier net 10. The load-bearing seams 34 also prevents the upper fastening arrangements 24, 26 from moving towards the center of the foldable barrier net 10.

By means of the way described above, a foldable barrier net 10 adapted to separate a cargo area of a vehicle 11 from a compartment for a driver and passenger in a vehicle 11 is provided, such that the foldable barrier net 10 is easy to manufacture and such that the foldable barrier net 10 is cost-effective.

Albeit the barrier net 10 is described by a few embodiments, the foldable barrier net 10 may be modified in a number of different ways within the scope of the invention as it is defined by the presented claims.

### ASPECT 2

### Summary of Aspect 2

A foldable barrier net according to the present invention comprise an upper edge element, a lower edge element, two side elements and a resilient member, preferably a net, and also at least one load-bearing belt, wherein the load-bearing belt is arranged in a passage in the upper edge element. The load-bearing belt is attached to an upper section in the vehicle via upper fastening arrangements and attached to a lower section in the vehicle by means of lower fastening elements. The upper fastening elements of the barrier net have hook elements, wherein the hook elements are arranged in the passage of the upper edge element and wherein the hook element engages with the load-bearing belt and upper fastening element, arranged in an upper section of the vehicle. The hook element has one section that engages with the load-bearing belt and one section that engages with an upper fastening element arranged in an upper section of the vehicle. The hook element comprises a bar, preferably from metal, wherein a section of the hook element engages with the load-bearing belt and wherein a section of the hook element has a catch element configured to engage with an upper fastening element arranged in an upper section of the vehicle.

When the vehicle, in which the barrier net is mounted, is exerted to a heavy deceleration, for example in case of a traffic accident, the load in the cargo area will move forward and load the foldable barrier net. The force from the load is taken up by the load-bearing belt and transferred to the upper fastening elements and the lower fastening elements of the vehicle.

At the upper fastening arrangements of the foldable barrier net, the force from the load-bearing belt will be transferred to the hook elements and further to the upper fastening elements of the vehicle. When the hook element is exerted to a large enough force, from the forward movement of the load, the hook elements will deform. In order to prevent deformation of the hook elements, such that the load-bearing belt disengages the hook element when the foldable barrier net is affected by a force from the load, the hook elements of the upper fastening arrangements are formed such that, when deformation occurs, sections of the hook elements will contact the upper edge element of the upper fastening arrangements, thus preventing further deformation.

By forming a foldable barrier net as set forth in the following example, a foldable barrier net that is easy to manufacture and a foldable barrier net that is cost-effective is provided.

### Description according to Aspect 2

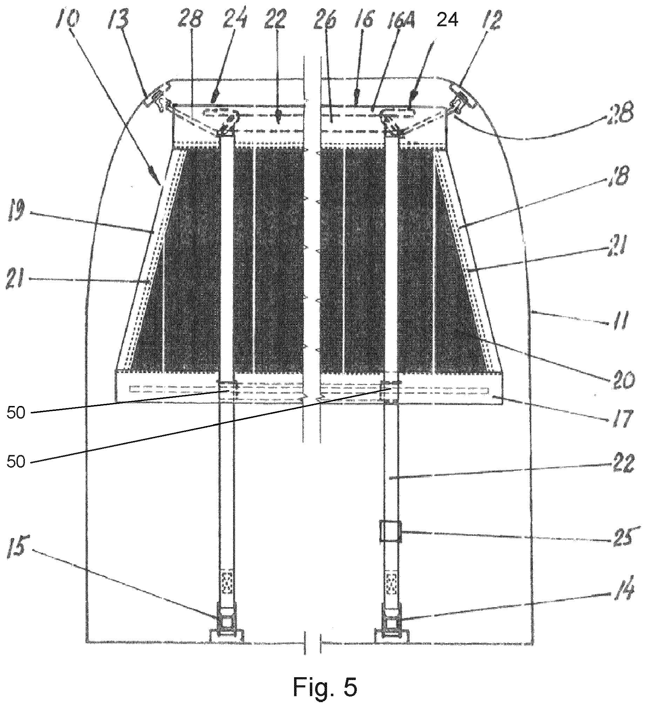

In Fig. 5, a foldable barrier net 10 mounted in a vehicle 11 is shown, wherein the foldable barrier net 10 is mounted by two upper fastening elements 12, 13 arranged in an upper section of a vehicle 11 and two lower fastening arrangements 14, 15 arranged in a lower section the vehicle 11. The barrier net 10 separates a cargo area in the vehicle 11 from a compartment for driver and passenger in the vehicle 11.

The foldable barrier net 10 comprises an upper edge element 16, a lower edge element 17 and two side elements 18, 19 arranged between the upper edge element 16 and the lower edge element 17. Between the upper edge element 16, the lower edge element 17 and the side elements 18, 19 a resilient element in the form of a net 20 is arranged. The net 20 is attached to the upper edge element 16, the lower edge element 17 and the side elements 18, 19 by means of seams 21. The upper edge element 16, the lower edge element 17 and the side elements 18, 19 are connected to one another by suitable seams 21 (not shown in the figures).

The upper edge element 16 is formed as a passage 16A, in which a load-bearing belt 22 extends. The load-bearing belt 22 is attached at the lower fastening elements 14, 15, arranged in a lower section of the vehicle 11, and are held to the upper fastening elements 12, 13, arranged in an upper section of the vehicle 11, by upper fastening arrangements 24. The load-bearing belt 22 is provided with at least one tensioning arrangement 25 such that the load-bearing belt 22 may be stretched between the lower fastening elements 14, 15 via the two upper fastening arrangements 24. The load-bearing belt 22 is movable in relation to the upper fastening arrangements 24.

When the vehicle 11 in which the foldable barrier net 10 is mounted is subjected to a heavy deceleration, such as in case of a traffic accident, the load in the cargo area of the vehicle 11 will move forward and be caught by the barrier net 10. The resilient element, the net 20, of the barrier net 10 catches the load and the force from the movement of the load is transferred from the net 20 to the upper edge element 16, the lower edge element 17 and the side elements 18, 19 and then further to the load-bearing belt 22. When the barrier net 10 is subjected to a force, e.g. in case of heavy deceleration, will, among other things, the upper edge elements 16 with the upper fastening arrangements 24 of the barrier net 10, move towards the center of the barrier net 10 along a section 26 of the load-bearing belt 22 located between the two upper fastening arrangements 24. The force from the forward movement of the load is transferred from the load-bearing belt 22 to the upper fastening arrangements 12, 13, arranged in an upper section of the vehicle 11, via the hook elements (28) of the upper fastening arrangements 24.

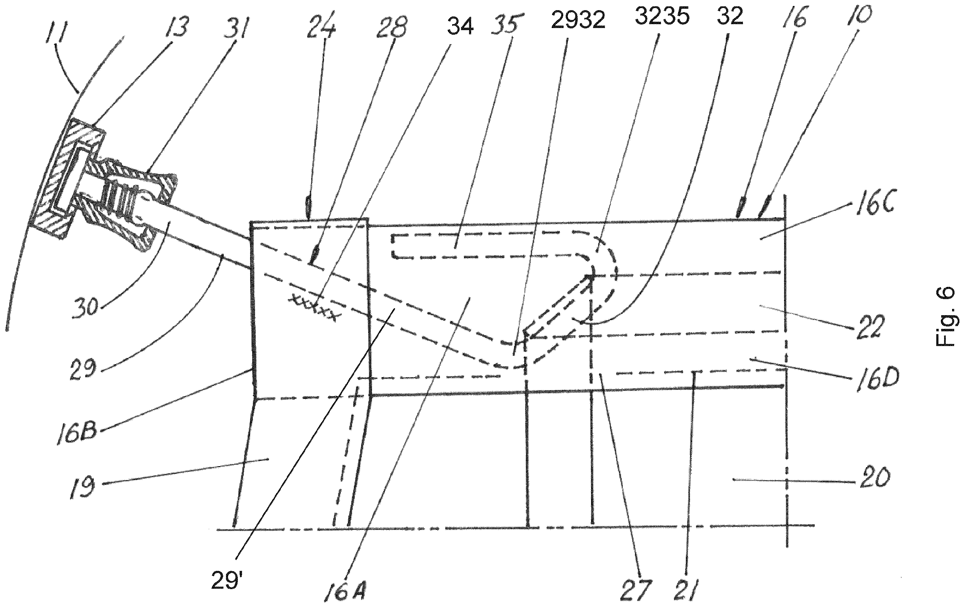

The following reference is given with reference to Fig. 6. Fig. 6 depicts a section of a foldable barrier net 10 with an upper fastening arrangement 24, when the foldable barrier net 10 is attached to an upper fastening element 13, arranged in an upper section of a vehicle 11, via a hook element 28 of the upper fastening arrangement 24. Fig. 6 shows the upper edge element 16 and a side element 19, wherein the side element 19 extends across the upper edge element 16 and where the side element 19 and the upper edge element 16 are connected by suitable seams 21, not shown. The upper edge element 16 comprises, in the shown embodiment, a belt material that is folded to form a passage 16A when, e.g. the upper edge element 16 and the resilient element, the net 20, of the barrier net are joined by seams 21. The belt material of the upper edge element 16 has no seam at open end sections 16B of the upper edge element 16. The passage 16A of the upper edge element 16 has open end sections 16B wherein a through passage 16A is formed. The passage 16A of the upper edge element 16 has an upper section 16C, at which the belt material is folded and a lower section 16D at which the upper edge element 16 is connected to the resilient element, the net 20. In the passage 16A of the upper edge element 16 a load-bearing belt 22 extends between hook elements 28 of two upper fastening arrangements 24, only one upper fastening arrangement 24 is shown in Fig. 6, where the upper fastening arrangements 24 operatively connects the load bearing belt 22 to the upper fastening elements 12, 13, arranged in an upper section of the vehicle 11, only one upper fastening arrangement 24 is shown in Fig. 6. The load-bearing belt 22 exits the upper edge element 16 through openings 27 in the passage 16A, that is formed by the upper edge element 16, e.g. through openings 27 in the seam 21 connecting the upper edge element 16 to the resilient element, the net 20. The load-bearing belt 22 extends through the openings 27 to lower fastening elements 14, 15 arranged at a lower section of the vehicle 11, not shown in Fig. 6.

The section of the foldable barrier net 10 shown in Fig. 6, illustrates an upper fastening arrangement 24 comprising a hook element 28, wherein a bigger part of the hook element 28 is configured to be arranged in the passage 16A of the upper edge element 16, when the foldable barrier net 10 is mounted in a vehicle 10. The hook element comprises a first section 29, wherein a part of the first section 29 is located exterior to the passage 16A of the upper edge element 16 of the upper fastening arrangement 24. The first section 29 of the hook element 28 comprises, at the part located exterior to the passage 16A of the upper edge element 16, at the free end 30, distanced from the upper edge element 16, a catch element 30 formed to engage the upper fastening element 13, arranged in an upper section of a vehicle 11, when the foldable barrier net 10 is mounted in a vehicle. The first section 29 of the hook element 28 extend through the open end section 16B of the passage 16A of the upper edge element 16 and is terminated by a first bent section 2932, wherein the first bent section 2932 is configured to be in connection with the opening 27 in the lower section 16D of the passage 16A of the upper edge element, when the hook element 28 is arranged in the passage 16A of the upper edge element when the barrier net is mounted in a vehicle. The first bent section 2932 of the hook element 28 transitions into the second section 32 of the hook element 28 extending towards the upper section 16C of the passage 16A of the edge element 16, where the belt material of the upper edge element 16 is folded, and from the open end section 16D of the passage 16A of the upper edge element 16. The second section 32 of the hook element 28 forms the part of the hook element 28 at which the load-bearing belt 22 abuts and at which the load-bearing belt 22 changes directions and exits the passage 16A of the upped edge element 16 through the opening 27. The second section 32 of the hook element 28 is terminated by a second bent section 3245, wherein the second bent section 3245 is configured to be adjacent to the upper section 16C, where the belt-material of the edge element is folded. The hook element 28 comprises after the second bent section 3245 of the hook element, at the upper section 16C of the passage 16A of the upper edge element, an end section 35 extending towards the open end section 16B of the upper edge element 16, the open end section 16B wherein the first section 29 of the hook element 28 is arranged when the hook element 28 is arranged in the passage 16A of the upper edge element.

The passage 16A of the upper edge element 16 extends between the lower edge of the lower section 16D of the edge element 16, by the seam 21, and the upper edge of the upper section 16C of the passage 16A of the edge element, where the belt-material forming the upper edge element 16 is folded, which is somewhat larger than the distance between the outer edge of the first bent section 2932 of the hook element 28 and the outer edge of the end section 35 of the hook element 28, such that the hook element 28 may be inserted in the passage 16A of the upper edge element 16 with a tight tolerance, e.g. 1 to 5 mm.

When the vehicle in which the foldable barrier net 10 is mounted, is exerted to heavy deceleration, e.g. in case of a traffic accident, the load will move forward and be caught by the barrier net 10. The resilient element, the net 20, catches the load and the force from the movement of the load is transferred from the net 20 to the upper edge element 16, the lower edge element 17 and the side element 18, 19 and then further to the load-bearing belt 22 and strive to deform the hook element 28 simultaneously as the upper edge element 16 with upper fastening arrangements 24 strive to move towards the central area of the barrier net 10, from the upper fastening elements 13, 14 , arranged in an upper section of the vehicle 11.

In order to prevent the hook elements 28 of the upper fastening arrangements 24 from leaving the passage 16A of the upper edge element 16 when the barrier net 10 is not mounted in a vehicle, load-bearing seams 34 may be provided at the section of the upper fastening arrangements 24 proximal to the open end sections 16B of the upper edge element such that the load-bearing seams 34 are located below the first sections 29 of the hook elements 28, when the hook elements 28 are arranged in the passage 16A of the upper edge element 16. The load-bearing seams 34 also prevent the upper edge element 16 with the upper fastening arrangements 24 to move towards the central section of the barrier net 10, from the upper fastening elements 13, 14, arranged in an upper section of the vehicle.

In order to prevent deformation of the hook element 28, causing the load-bearing belt 22 to disengage the hook element 28, when the foldable barrier net 10 is subjected to a force from the load, the hook elements 28 of the upper fastening arrangements 24 of the barrier net 10 are formed such that at a load causing deformation, sections of the hook element 28 will contact the lower edge of the lower sections 16D of the upper edge elements 16 of the fastening arrangements 24, such that further deformation is prevented.

When the hook element 28 comes into contact with the lower edge of the lower section 16D of the upper edge element 16 of the upper fastening arrangements 24 and the upper edge of the upper section 16C of the upper edge element, deformation causing the load-bearing belt to disengage from the hook element 28 of the hook element 28 is prevented.

As a certain amount of force from the load-bearing belt 22 is taken by the upper edge element 16 and some deformation of the hook element 28 is permitted, the hook element 28 can be produced from a rod having a reduced diameter.

By producing the hook element 28 from a rod, made from e.g. metal, with smallest possible diameter, the radiuses between the first section 31 of the hook element 28 and the second section 32 of the hook element and also the radius between second section 32 of the hook element 17 and the end section 33 of the hook element be minimized. With a hook element 28 having the smallest possible diameter, the width of the upper edge element may be minimized. This makes it possible to produce a cost-effective foldable barrier net 10.

By producing the hook element 28 from a rod, made from e.g. metal, wherein one end the rod of the hook element 28 is provided with a catch element 30, arranged to engage with upper fastening elements 12, 13 arranged in an upper section of a vehicle 11 and by shaping the rod of the hook element 28 to the shape described above solely by bending of the rod of the hook element 28, a barrier net 10 that is easy to produce and that is cost-effective can be provided.

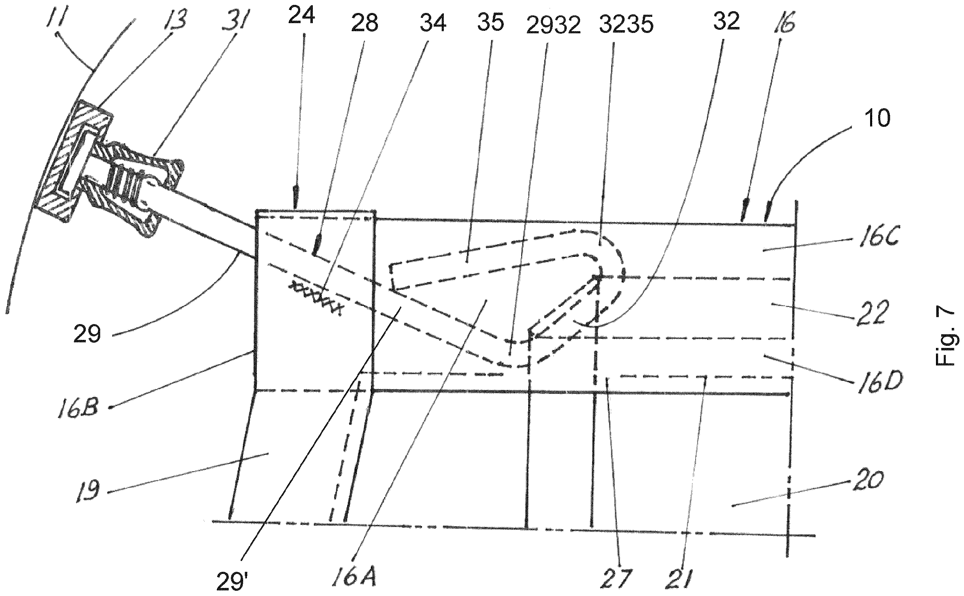

Fig. 7 shows a section of a foldable barrier net 10, at the upper fastening arrangement 24, when the foldable barrier net 10 is mounted to the upper fastening element 13, arranged in an upper section of a vehicle 11, via the hook element 28 of the upper fastening arrangement 24. The section of foldable barrier net 10 shown in Fig. 7, comprises the corresponding units as have been described above in relation to Fig. 6. The difference between the embodiment of Fig. 7 and the embodiment of Fig. 6, is the form of the hook element 28 of the fastening arrangements 24. Below, only the form of the hook elements 28 will be detailed.

The section of the foldable barrier net 10 shown in Fig. 7, depicts an upper fastening arrangement 24 comprising a hook element 28, wherein the larger part of the hook element 28 is configured to be arranged in the passage 16A of the upper edge element 16, when the foldable barrier net 10 is mounted in a vehicle 11. The hook element 28 comprises a first section 29, wherein a part of the first section 10 is external to the passage 16A of the upper edge element 16 of the upper fastening arrangement 24. The first section 29 of the hook element 28 comprises a part that is external to the passage 16A of the upper edge element 16, at the free end, located at a distance from the upper edge element 16 and is terminated by a catch element 30 configured to engage with an upper fastening element 13, arranged in an upper section of a vehicle 11, when the foldable barrier net 10 is mounted in a vehicle 11. The first section 29 of the hook element 28 extends through open end section 16B of the passage 16A of the upper edge element 16 and is terminated by a first bent section 2932, wherein the first bent section 2932 is configured to be in connection with the opening 27 in the lower section 16D of the passage 16A of the upper edge element 16, when the hook element 28 is arranged in the passage 16A of the upper edge element 16 and when the barrier net 10 is mounted in a vehicle. The first bent section 2932 of the hook element 28 transitions into the second section 32 extending towards the upper section 16C of the passage 16A of the upper edge element 16, where the belt-material of the upper edge element 16 is folded, and from the open end section 16B of the passage 16A of the upper edge element 16. The second section 32 of the hook element 28 forms the part of the hook element 28 where the load-bearing belt 22 abuts and where the load-bearing belt changes directions and exits the passage 16A of the upper edge element through an opening 27. The second section 32 of the hook element 28 is terminated by a second bent section 3245, wherein the second bent section 3245 is configured to be adjacent to upper the section 16C of the passage 16A of the upper edge element 16, where the belt-material of the upper edge element is folded. The hook element 28 has, after the second bent section 3245 of the hook element 28, at the upper section 16C of the passage 16A of the upper edge element 16, an end section 35 that extends towards the open end section 16B of the upper edge element 16, the open end section 16B wherein the first section 29 of the hook element 28 is arranged when the hook element 28 is arranged in the passage 16A of the upper edge element 16, and towards the first section 29 of the hook element such that a substantially closed loop is formed.

The passage 16A of the upper edge element 16 extends between the lower edge of the lower section 16D of the edge element 16, by the seam 21, and the upper edge of the upper section 16C of the passage 16A of the upper edge element 16, where the belt-material forming the upper edge element 16 is folded, which is somewhat larger than the distance between the outer edge of the first bent section 2932 of the hook element 28 and the outer edge of the second bent section 3245 of the hook element 28, such that the hook element 28 may be inserted in the passage 16A of the upper edge element 16 with a tight tolerance, e.g. 1 to 5 mm.

When the vehicle 11 in which the foldable barrier net 10 is mounted is subjected to a heavy deceleration, e.g. in case of a traffic accident, the load will move forward and will be caught by the barrier net 10. The resilient element, the net 20, catches the load and the force from the forward movement of the load is transferred from the net 20 to upper edge element 16, the lower edge element 17 and the side elements 18, 19 and then further to the load-bearing belt 22. Forces will be in the same directions as the sections of the load-bearing belt 22 and will strive to deform the hook element 28 as the upper edge element 16 with the upper fastening arrangements will strive to move towards the central section of the barrier net 10, from the upper fastening elements 13, 14, arranged in an upper section of the vehicle 11.

In order to prevent the hook elements 28 of the upper fastening arrangements 24 to move out of the passage 16A of the upper edge element when the barrier net 10 is not mounted in a vehicle, load-bearing seams 34 may be provided at the section of the upper fastening arrangements 24 proximal to the open end sections 16B of the upper edge element 16 such that the load-bearing seams 34 are located below the first sections 29 of the hook elements 28, when the hook elements 28 are arranged in the passage 16A of the upper edge element 16. The load-bearing seams 34 also prevent the upper edge element 16 with the upper fastening arrangements 24 to move towards the central section of the barrier net 10, from the upper fastening elements 13, 14, arranged in an upper section of the vehicle 11, when the foldable barrier net 10 is subjected to a force from the load. As the hook element 28 forms a substantially closed loop in which the load-bearing belt 22 is arranged, the hook element 28 cannot exit the load-bearing belt 22 even if the hook element 28 is located outside the passage 16A of the upper edge element 16.

In order to prevent deformation of the hook element 28, causing the load-bearing belt 22 to disengage the hook element 28, when the foldable barrier net 10 is subjected to a force from the load, the hook elements 28 of the upper fastening arrangements 24 of the barrier net 10 are formed such that at a load causing deformation, sections of the hook elements 28 will contact the lower edge of the lower sections 16D of the upper edge elements 16 of the upper fastening arrangements 24 such that further deformation is prevented.

As the hook element 28 comes into contact with the lower edge of the lower section 16D of the upper edge element 16 of the upper fastening arrangements 24 and the upper edge of the upper section 16C of the upper edge element 16, deformation of the hook element 28 causing the load-bearing belt 22 to disengage the hook element 28 is prevented. As part of the force from the load-bearing belt 22 is taken up by the upper edger element 16 and some deformation of the hook element 28 is allowed, the hook element 28 can be produced from a rob having a reduced diameter.

By producing the hook element 28 from a bar, e.g. a metal bar, with the smallest possible diameter, the radiuses of at the first bent section 2932 of the hook element 28, between the first section 29 of the hook element 30 and the second section 32 of the hook element 28 and also at the radius at the second bent section 3245 of the hook element 28, between the second section 32 of the hook element 28 and the end section 35 of the hook element can be minimized. With a hook element 28 having the smallest possible diameter, the breadth of the belt of the upper edge element can be minimized. This makes it possible to provide a cost effective foldable barrier net 10.

By producing the hook elements 28 from a bar, e.g. a metal bar, wherein one end of the rod of the hook element 28 is provided with a catch element 30, configured to engage with upper fastening elements 12, 13 arranged in an upper section of a vehicle 11 and by forming the rod of the hook element 28 to the above described shape simply by bending of the rod of the hook element 28, a foldable barrier net 10 can be produced that is easy to manufacture and that is cost effective.

In the above disclosed embodiments, it has been stated that the load-bearing belt 22 exits the passage 16A of the upper edge element 16 through openings 27 in the seam 21 joining the upper edge element 16 to the resilient member, the net 20, but the openings 27 may very well be provided in the belt-shaped materiel comprising the upper edge element 16.

In the above disclosed embodiments, it has been stated that the hook elements 28 of the upper fastening arrangements 24 may be of metal, but the hook elements 28 may be formed from other materials that are able to take the forces presented.

In the above disclosed embodiments, it has been stated that the load-bearing belt 22 extends between the lower fastening elements 14, 15, but the load-bearing belt may be provided in two sections joined by a central section of the upper edge element 16 such that a continuous force bearing unit is formed from the two sections of the load-bearing belt 22 and a central part of the upper edge element 16.

Foldable barrier nets 10 comprising fastening arrangements 24 as disclosed above and provided in the below clauses will provide foldable barrier nets 10 configured to separate a cargo area of a vehicle 11 from a compartment for a driver and passenger in a vehicle 11, that are simple to produce and that are cost effective.

Albeit the foldable barrier net 10 has been described by a few embodiments, the foldable barrier net 10 may be modified in a number of different ways within the inventive concept.

### COMMON ASPECT

From the above presented aspect 1 and aspect 2, it is clear that these two aspect are unambiguously related to a common inventive concept as presented in the claims below. The main difference between aspect 1 and aspect 2 is the directions of the first bent section 2932 and the second bent section 3245 when the hook elements 28 of the respective aspect are mounted in a vehicle 11.

The skilled person understands, after digesting the teachings of this disclosure, that the features of aspect 1 and aspect 2 may be freely combined. For instance, the restricting seams 36 presented with reference to aspect 1 are enabled with the general inventive concept and may consequently be freely used with the embodiments of aspect 2 as they relate to the same inventive concept.

The common aspect may consequently be exemplified in a non-limiting embodiment of a foldable barrier net 10 for separating a cargo area of a vehicle 11 from a passenger compartment of a vehicle 11, as illustrated in Fig. 1 and Fig. 5 respectively. The separation of the passenger compartment from the cargo area is accomplished by fastening the foldable barrier net 10 to upper fastening elements 12, 13 at an upper section of the vehicle and lower fastening elements 14, 15 at a lower section of the vehicle 11. The foldability of the barrier net 10 is inherent from the construction of the foldable barrier net 10 as no stiff sections are needed extending between e.g. the upper fastening elements 12, 13, the lower fastening elements 14, 15 or between either of the upper fastening elements 12, 13 and either of the lower fastening elements 14, 15. However, in some embodiments the foldable barrier net 10 is provided with rigid reinforcements, such as a rods or similar, preferably extending along any of the edges of the foldable barrier net 10.

The foldable barrier net 10 comprises an upper edge element 16 having a through passage 16A with open end sections 16B and a resilient element, preferably in the form of a net 20, attached to the upper edge element 16. The foldable barrier net 10 further comprises hook elements 28 arranged at opposite ends of the passage 16A. Each hook element 28 is partly extending in the passage 16A and extending through the open end sections 16B for allowing fastening to the upper fastening elements 12, 13 of the vehicle 11. A load-bearing belt 22 extend partly inside the passage 16A of the upper edge element 16. The load-bearing belt 22 is arranged to change directions by engagement with the hook elements 28 inside the passage 16A. The changed direction from a horizontal direction extending between the upper fastening elements 14, 15 to a vertical direction towards the lower fastening elements 14, 15 makes it possible to fasten the load-bearing belt 22 to the lower fastening elements 14, 15 of the vehicle 11.

As is clear from both aspect 1 and aspect 2, the arrangement of the hook elements 28 partly inside the passage 16A and the load-bearing belt 22 engaging the hook element 28 inside the passage 16A, makes it possible, as previously presented, to form the hook element 28 in a simple and cost-effective manner since edges of the passage 16A will prevent the hook element 28 from deforming and dis-engaging the load-bearing belt 22.

The upper edge element 16 may in some embodiments be provided with one or more openings 27, and the foldable barrier net 10 may be configured such that the hook elements 28 are extending in the passage 16A at the position of the openings 27. The opening 27 will make it possible to access the portions of the hook elements 28 located inside the passage 16A thereby simplifying production of the foldable barrier net 10.

In some embodiments of the foldable barrier net 10, the upper edge element 16 is formed by folding an upper edge material to form the through passage 16A. This may be accomplished by folding a belt-material along its extension. The edges opposite to the folded side of the upper edge element 16 are joined together. The joining may be by any suitable joining means, preferably by one or more seams 21. The joining means, e.g. the seam 21, may also be used to attach the resilient element 20 to the upper edge element 16. The resilient element 20 may be arranged to be sandwiched between the edges opposite to the folded side of the upper edge element 16 making it possible to produce a durable and cost-effective foldable barrier net in a facilitated manner.

It should be mentioned that the abovementioned one or more openings 27 may very well be formed from openings 27 in the seams 21 making them easy to produce with high quality.

Alternatively or additionally, one or more openings 27 may be provided in the upper edge element material. This may be accomplished by e.g. cutting a suitably shaped slit or hole in the material of the upper edge element 16. Preferably, the material of the upper edge element 16 is a belt material.

In some embodiments, the foldable barrier net 10 further comprises a lower edge element 17 attached to the resilient element 20. As the name indicates, the lower edge element 17 is attached at a side of the resilient element 20 being closest to the lower fastening elements 14, 15 when the barrier net 10 is mounted in the vehicle 11, that is the side of the resilient element 20 being closest to a floor of the vehicle 11. The load-bearing belt 22 may be arranged to engage with the lower edge element 17 as the load bearing belt 22 extends substantially vertically from the hook elements 28 towards the lower fastening elements 14, 15. The load bearing belt 22 may engage with the lower edge element 17 at engagement portions 50 of the lower edge element 17. Preferably, the engagement portions 50 are formed as one or more holes, cuts or openings in the lower edge element 17 through which the load-bearing belt 22 extends. This provides for a cost effective engagement between the load-bearing belt and the lower edge element 17 that makes it possible to move the load-bearing belt 22 in relation to the lower edge element 17. In other words, the resilient element 20 may be creased and folded by pushing the lower edge element 17 towards the upper edge element 16 thus compacting the foldable barrier net 10 when it is not in use.

The hook elements 28 may, in some embodiments be described as comprising a first section 29. This first section 29 is partly located outside the passage 16A and this exterior part of the first section 29 is configured for fastening to the upper fastening elements 12, 13 of the vehicle 11. The rest of the first section 29' is located inside the passage 16A and this interior part of the first section 29' transitions into a second section 32 by means of a first bent section 2932, all of which the second section 32 and the first bent section 2932 are inside the passage 16A. The second section 32 transitions into an end section 35 by means of a second bent section 3235. Also these sections 35, 3235 are inside the passage 16A. In other words, the hook element 29 is arranged to have a part of the first section 29', the first bent section 2932, the second section 32, the second bent section 3235 and the end section 35 arranged in the passage 16A of the upper edge element 16.

Just to mention a few examples, the first section 29, or at least the interior part 29' of the first section 29, is extending horizontally. The second section 32 extends at an angle relative the horizontal direction of the first section 29 due to the first bent section 2932. The angle between the first section 29 and the second section 32 is e.g. between 90° and 180° such as between 120° and 150°.

The end section 35 is extending at an angle relative the second section 32 due to the second bent section 3235. The angle between the second section 32 and the end section 35 is e.g. between 30° and 90° such as between 40° and 50°.

The above mentioned angles are preferably chosen such that the angle between the first section 29 and the end section 35 exceeds 180°; preferably the total angle between the first section 29 and the end section 35 is between 180° and 270°.

Based on the abovementioned description of the hook element 28, the first bent section 2932 of the hook element 28, the second section 32 of the hook element 28 and the second bent section 3245 of the hook element 28 may be integrally formed. That is to say, the hook element 28 may be formed from one piece of material simply by bending, e.g. no welding is necessary when producing the hook element 28.

In one embodiment of the foldable barrier net, one or more load-bearing seams 34 are arranged in the upper edge element 16 adjacent to a side of the end section 35 of the hook element 28 facing the resilient element 20. This load-bearing seam 34 will prevent the end section 35 of the hook element 28 from moving, i.e. changing a radius of the second bent section 3235, and consequently preventing the hook element 28 from being deformed such that there is a risk that the load-bearing belt 22 disengages from the hook element 28.

In one embodiment, the end section 35 of the hook element 28 is arranged adjacent to a side of the passage 16A facing away from the resilient element 20. Similarly to the embodiment above with the load-bearing seam 34, the side of the passage 16A facing away from the resilient element 20 will prevent the end section 35 of the hook element 28 from moving, i.e. changing a radius of the second bent section 3235, and consequently preventing the hook element 28 from being deformed thus risking that that the load-bearing belt 22 disengages from the hook element 28.

In one embodiment of the barrier net 10, one or more load bearing seams 34 are arranged in the upper edge element 16 adjacent to a side of the first section 29' of the hook element 28 facing the resilient element 20. Analogously to the embodiments above, the load-bearing seam 34 will in this embodiment prevent the first section 29' of the hook element 28 from moving, i.e. changing a radius of the fist bent section 2932, and consequently preventing the hook element 28 from being deformed and risking that that the load-bearing belt 22 disengages from the hook element 28.

It should be mentioned that the embodiments above detailing the prevention of movement of sections of the hook element 28 are possible to combine with one another. The movement referred to, above and generally, is typically a movement arising from forces acting upon the barrier net 10 when it is mounted in a vehicle 11, e.g. from a load being caught by the resilient element 20 in case of deceleration of the vehicle 11.

The hook elements 28 may in some embodiments be made from a rod material, preferably a metal rod material.

One or more of the hook elements 28 may further comprise a catch element 30 configured to engage with the upper fastening elements 12, 13 of vehicle 11. The catch element 30 will typically be formed at an end of the first section 29 configured for being closest to the upper fastening elements 12, 13.

In order to ensure that the foldable barrier net 10 fits snuggly to the interior of the vehicle and that sufficient tension is in the load-bearing belt 22, the load bearing belt may further comprises at least one tensioning arrangement 25. The tensioning arrangement 25 may be any suitable tensioning arrangement 25 that allows for tensioning and removal of slack in the load-bearing belt when it is mounted in a vehicle 11.

In order to ensure that the hook elements 28 stay in the preferred arrangement and that e.g. not the entire hook element 28 slides inside the passage 16A, one or more restricting seams 36 may be provided in the upper edge element 16. These restricting seams 36 are typically arranged proximal to ends of the hook elements 28 facing away from the upper fastening elements 12, 13 of the vehicle 11.

## Claims

1. A foldable barrier net (10) for separating a cargo area of a vehicle (11) from a passenger compartment of the vehicle (11) by being fastened to upper fastening elements (12, 13) and lower fastening elements (14, 15) of the vehicle (11), the foldable barrier net (10) comprises:
an upper edge element (16) having a through passage (16A) with open end sections (16B),
a resilient element, preferably in the form of a net (20), attached to the upper edge element (16),
hook elements (28) arranged at opposite ends of the passage (16A), each hook element (28) partly extending in the passage (16A) and extending through the open end sections (16B) for allowing fastening to the upper fastening elements (12, 13) of the vehicle (11), and
a load-bearing belt (22), extending partly inside the passage (16A) of the upper edge element (16) and arranged to change directions by engagement with the hook elements (28) inside the passage (16A) for fastening of the load-bearing belt (22) to the lower fastening elements (14, 15) of the vehicle (11).

2. The foldable barrier net (10) of claim 1, wherein the upper edge element (16) is provided with openings (27), and wherein the hook elements (28) are extending in the passage (16A) at the openings (27).

3. The foldable barrier net (10) according to any of the preceding claims, wherein the upper edge element (16) is formed by folding an upper edge material to form the through passage (16A), and wherein edges opposite to the folded side of the upper edge element (16) are joined by one or more seams (21), wherein the seam (21) also attaches the resilient element (20) to the upper edge element (16).

4. The foldable barrier net (10) according to claim 2 and 3, wherein at least one of the openings (27) is provided as an opening (27) in the seam (21).

5. The foldable barrier net (10) according to any of the claims 2 to 4, wherein at least one of the openings (27) is provided as an opening (27) in the upper edge element material.

6. The foldable barrier net (10) according to any of the preceding claims, further comprising a lower edge element (17) attached to the resilient element (20) at a side of the resilient element (20) being closest to the lower fastening elements (14, 15) when the barrier net (10) is mounted in the vehicle (11), wherein the load-bearing belt (22) is further arranged to engage with the lower edge element (17).

7. The foldable barrier net (10) according to any of the preceding claims, wherein at least one of the hook elements (28) comprises a first section (29) partly located outside the passage (16A) and configured for fastening to the upper fastening elements (12, 13) of the vehicle (11), the rest of the first section (29') is located inside the passage (16A) and transitions into a second section (32) by means of a first bent section (2932), the second section (32) transitions into an end section (35) by means of a second bent section (3235).

8. The foldable barrier net (10) according to claim 7, wherein the first bent section (2932) of the hook element (28), the second section (32) of the hook element (28) and the second bent section (3245) of the hook element (28) are integrally formed.

9. The foldable barrier net (10) according to claim 7 or 8, wherein a load-bearing seam (34) is arranged in the upper edge element (16) adjacent to a side of the end section (35) of the hook element (28) facing the resilient element (20).

10. The foldable barrier net (10) according to any of claims 7 to 9, wherein the end section (35) of the hook element (28) is arranged adjacent to a side of the passage (16A) facing away from the resilient element (20).

11. The foldable barrier net (10) according to any of claims 7 to 10, wherein a load bearing seam (34) is arranged in the upper edge element (16) adjacent to a side of the first section (29') of the hook element (28) facing the resilient element (20).

12. The foldable barrier net (10) according to any of the preceding claims, wherein the hook elements (28) are made from a rod material, preferably a metal rod material.

13. The foldable barrier net (10) according to any of the preceding claims, wherein at least one of the hook elements (28) further comprises a catch element (30) configured to engage with the upper fastening elements (12, 13) of vehicle (11).

14. The foldable barrier net (10) according to any of the preceding claims, wherein the load-bearing belt (22) further comprises at least one tensioning arrangement (25).

15. The foldable barrier net (10) according to any of the preceding claims, wherein one or more restricting seams (36) are provided in the upper edge element (16) proximal to ends of the hook elements (28) facing away from the upper fastening elements (12, 13) of the vehicle (11).

## Patentansprüche

1. Ein faltbares Barriere- bzw. Absperrnetz (10) zum Trennen eines Ladebereichs eines Fahrzeugs (11) von einem Fahrgastraum des Fahrzeugs (11), indem es an oberen Befestigungselementen (12, 13) und unteren Befestigungselementen (14, 15) des Fahrzeugs (11) befestigt wird, wobei das faltbare Barrierenetz (10) Folgendes aufweist:
ein oberes Randelement (16) mit einem Durchgang (16A) mit offenen Endabschnitten (16B),
ein elastisches Element, vorzugsweise in der Form eines Netzes (20), das an dem oberen Randelement (16) befestigt ist,
Hakenelemente (28), die an gegenüberliegenden Enden des Durchgangs (16A) angeordnet sind, wobei jedes Hakenelement (28) teilweise in den Durchgang (16A) hineinragt und sich durch die offenen Endabschnitte (16B) erstreckt, um eine Befestigung an den oberen Befestigungselementen (12, 13) des Fahrzeugs (11) zu ermöglichen, und
einen lasttragenden Gurt (22), der sich teilweise innerhalb des Durchgangs (16A) des oberen Randelements (16) erstreckt und so angeordnet ist, dass er durch Eingriff mit den Hakenelementen (28) innerhalb des Durchgangs (16A) zur Befestigung des lasttragenden Gurts (22) an den unteren Befestigungselementen (14, 15) des Fahrzeugs (11) die Richtung ändert.

2. Das faltbare Barrierenetz (10) nach Anspruch 1, wobei das obere Randelement (16) mit Öffnungen (27) versehen ist, und wobei sich die Hakenelemente (28) in dem bzw. in den Durchgang (16A) an den Öffnungen (27) erstrecken.

3. Das faltbare Barrierenetz (10) nach einem der vorhergehenden Ansprüche, wobei das obere Randelement (16) durch Falten eines oberen Randmaterials gebildet wird, um den Durchgang (16A) zu bilden, und wobei der gefalteten Seite des oberen Randelements (16) gegenüberliegende Ränder durch eine oder mehrere Nähte (21) verbunden sind, wobei die Naht (21) auch das elastische Element (20) an dem oberen Randelement (16) befestigt.

4. Das faltbare Barrierenetz (10) nach Anspruch 2 und 3, wobei mindestens eine der Öffnungen (27) als Öffnung (27) in der Naht (21) vorgesehen ist.

5. Das faltbare Barrierenetz (10) nach einem der Ansprüche 2 bis 4, wobei mindestens eine der Öffnungen (27) als Öffnung (27) im Material des oberen Randelements vorgesehen ist.

6. Das faltbare Barrierenetz (10) nach einem der vorhergehenden Ansprüche, das ferner ein unteres Randelement (17) aufweist, das an dem elastischen Element (20) an einer Seite des elastischen Elements (20) befestigt ist, die den unteren Befestigungselementen (14, 15) am nächsten ist, wenn das Barrierenetz (10) in dem Fahrzeug (11) angebracht ist, wobei der lasttragende Gurt (22) ferner so angeordnet ist, dass er mit dem unteren Randelement (17) in Eingriff kommt.

7. Das faltbare Barrierenetz (10) nach einem der vorhergehenden Ansprüche, wobei mindestens eines der Hakenelemente (28) einen ersten Abschnitt (29) aufweist, der teilweise außerhalb des Durchgangs (16A) angeordnet und zur Befestigung an den oberen Befestigungselementen (12, 13) des Fahrzeugs (11) eingerichtet ist, wobei sich der Rest des ersten Abschnitts (29') innerhalb des Durchgangs (16A) befindet und mittels eines ersten gebogenen Abschnitts (2932) in einen zweiten Abschnitt (32) übergeht, wobei der zweite Abschnitt (32) mittels eines zweiten gebogenen Abschnitts (3235) in einen Endabschnitt (35) übergeht.

8. Das faltbare Barrierenetz (10) nach Anspruch 7, wobei der erste gebogene Abschnitt (2932) des Hakenelements (28), der zweite Abschnitt (32) des Hakenelements (28) und der zweite gebogene Abschnitt (3245) des Hakenelements (28) einstückig ausgebildet sind.

9. Das faltbare Barrierenetz (10) nach Anspruch 7 oder 8, wobei eine tragende Naht (34) in dem oberen Randelement (16) angrenzend an eine dem elastischen Element (20) zugewandte Seite des Endabschnitts (35) des Hakenelements (28) angeordnet ist.

10. Das faltbare Barrierenetz (10) nach einem der Ansprüche 7 bis 9, wobei der Endabschnitt (35) des Hakenelements (28) benachbart zu einer dem elastischen Element (20) abgewandten Seite des Durchgangs (16A) angeordnet ist.

11. Das faltbare Barrierenetz (10) nach einem der Ansprüche 7 bis 10, wobei eine lasttragende Naht (34) in dem oberen Randelement (16) angrenzend an eine dem elastischen Element (20) zugewandte Seite des ersten Abschnitts (29') des Hakenelements (28) angeordnet ist.

12. Das faltbare Barrierenetz (10) nach einem der vorhergehenden Ansprüche, wobei die Hakenelemente (28) aus einem Stab- bzw. Stäbchenmaterial, vorzugsweise einem Metallstab- bzw. Metallstäbchenmaterial, hergestellt sind.

13. Das faltbare Barrierenetz (10) nach einem der vorhergehenden Ansprüche, wobei mindestens eines der Hakenelemente (28) ferner ein Fangelement (30) aufweist, das eingerichtet ist, in die oberen Befestigungselemente (12, 13) des Fahrzeugs (11) einzugreifen.

14. Das faltbare Barrierenetz (10) nach einem der vorhergehenden Ansprüche, wobei der lasttragende Gurt (22) weiterhin mindestens eine Spannanordnung (25) aufweist.

15. Das faltbare Barrierenetz (10) nach einem der vorhergehenden Ansprüche, wobei eine oder mehrere Begrenzungsnähte (36) in dem oberen Randelement (16) in der Nähe von Enden der Hakenelemente (28) vorgesehen sind, die von den oberen Befestigungselementen (12, 13) des Fahrzeugs (11) wegweisen.

## Revendications

1. Filet de retenue pliant (10) pour séparer une zone de chargement d'un véhicule (11) d'un compartiment passager du véhicule (11) en étant fixé à des éléments de fixation supérieurs (12, 13) et à des éléments de fixation inférieurs (14, 15) du véhicule (11), le filet de retenue pliant (10) comprenant :
un élément de bord supérieur (16) comportant un passage traversant (16A) doté de sections d'extrémité ouvertes (16B),
un élément élastique, de préférence sous la forme d'un filet (20), fixé à l'élément de bord supérieur (16),
des éléments crochets (28) disposés au niveau d'extrémités opposées du passage (16A), chaque élément crochet (28) s'étendant partiellement dans le passage (16A) et s'étendant à travers les sections d'extrémité ouvertes (16B) pour permettre la fixation aux éléments de fixation supérieurs (12, 13) du véhicule (11), et
une sangle de support de charge (22), s'étendant partiellement à l'intérieur du passage (16A) de l'élément de bord supérieur (16) et conçue pour modifier des directions par une coopération avec les éléments crochets (28) à l'intérieur du passage (16A) à des fins de fixation de la sangle de support de charge (22) aux éléments de fixation inférieurs (14, 15) du véhicule (11).

2. Filet de retenue pliant (10) selon la revendication 1, dans lequel l'élément de bord supérieur (16) est pourvu d'ouvertures (27), et dans lequel les éléments crochets (28) s'étendent dans le passage (16A) au niveau des ouvertures (27).

3. Filet de retenue pliant (10) selon l'une quelconque des revendications précédentes, dans lequel l'élément de bord supérieur (16) est formé par un pliage d'un matériau de bord supérieur pour former le passage traversant (16A), et dans lequel des bords opposés au côté plié de l'élément de bord supérieur (16) sont reliés par une ou plusieurs coutures (21), dans lequel la couture (21) fixe également l'élément élastique (20) à l'élément de bord supérieur (16).

4. Filet de retenue pliant (10) selon la revendication 2 et la revendication 3, dans lequel au moins l'une des ouvertures (27) est ménagée, en tant qu'ouverture (27), dans la couture (21).

5. Filet de retenue pliant (10) selon l'une quelconque des revendications 2 à 4, dans lequel au moins l'une des ouvertures (27) est ménagée, en tant qu'ouverture (27), dans le matériau d'élément de bord supérieur.

6. Filet de retenue pliant (10) selon l'une quelconque des revendications précédentes, comprenant en outre un élément de bord inférieur (17) fixé à l'élément élastique (20) au niveau d'un côté de l'élément élastique (20) qui est le plus proche des éléments de fixation inférieurs (14, 15) lorsque le filet de retenue (10) est monté dans le véhicule (11), dans lequel la sangle de support de charge (22) est en outre conçue pour coopérer avec l'élément de bord inférieur (17).

7. Filet de retenue pliant (10) selon l'une quelconque des revendications précédentes, dans lequel au moins l'un des éléments crochets (28) comprend une première section (29) située partiellement à l'extérieur du passage (16A) et conçue à des fins de fixation aux éléments de fixation supérieurs (12, 13) du véhicule (11), le reste de la première section (29') est situé à l'intérieur du passage (16A) et se transforme en une seconde section (32) au moyen d'une première section courbée (2932), la seconde section (32) se transforme en une section d'extrémité (35) au moyen d'une seconde section courbée (3235).

8. Filet de retenue pliant (10) selon la revendication 7, dans lequel la première section courbée (2932) de l'élément crochet (28), la seconde section (32) de l'élément crochet (28) et la seconde section courbée (3245) de l'élément crochet (28) sont formées d'une seule pièce.

9. Filet de retenue pliant (10) selon la revendication 7 ou la revendication 8, dans lequel une couture de support de charge (34) est disposée dans l'élément de bord supérieur (16) adjacente à un côté de la section d'extrémité (35) de l'élément crochet (28) faisant face à l'élément élastique (20).

10. Filet de retenue pliant (10) selon l'une quelconque des revendications 7 à 9, dans lequel la section d'extrémité (35) de l'élément crochet (28) est disposée adjacente à un côté du passage (16A) faisant face à l'opposé de l'élément élastique (20).

11. Filet de retenue pliant (10) selon l'une quelconque des revendications 7 à 10, dans lequel une couture de support de charge (34) est disposée dans l'élément de bord supérieur (16) adjacente à un côté de la première section (29') de l'élément crochet (28) faisant face à l'élément élastique (20).

12. Filet de retenue pliant (10) selon l'une quelconque des revendications précédentes, dans lequel les éléments crochets (28) sont fabriqués à partir d'un matériau sous forme de tige, de préférence d'un matériau sous forme de tige métallique.

13. Filet de retenue pliant (10) selon l'une quelconque des revendications précédentes, dans lequel au moins l'un des éléments crochets (28) comprend en outre un élément de verrouillage (30) conçu pour coopérer avec les éléments de fixation supérieurs (12, 13) du véhicule (11).

14. Filet de retenue pliant (10) selon l'une quelconque des revendications précédentes, dans lequel la sangle de support de charge (22) comprend en outre au moins un agencement de serrage (25).

15. Filet de retenue pliant (10) selon l'une quelconque des revendications précédentes, dans lequel une ou plusieurs coutures de restriction (36) sont disposées dans l'élément de bord supérieur (16) à proximité d'extrémités des éléments crochets (28) faisant face à l'opposé des éléments de fixation supérieurs (12, 13) du véhicule (11).
